# EUROPÄISCHE PATENTSCHRIFT

(11) **EP 1 237 759 B1**
(45) Veröffentlichungstag und Bekanntmachung des Hinweises auf die Patenterteilung: **10.03.2004**
(21) Anmeldenummer: 99966877.5
(22) Anmeldetag: 16.12.1999
(51) Int. Cl.: B60R 21/01

(54) **VERFAHREN ZUM STEUERN DER NOTENERGIEVERSORGUNG SOWIE NOTENERGIEVERSORGUNGSSYSTEM, INSBESONDERE FÜR EIN FAHRZEUGINSASSEN-SCHUTZSYSTEM**
METHOD FOR CONTROLLING THE EMERGENCY POWER SUPPLY AND AN EMERGENCY POWER SUPPLY SYSTEM, ESPECIALLY FOR A VEHICLE OCCUPANT PROTECTION SYSTEM
PROCEDE DE COMMANDE DE L'ALIMENTATION EN ENERGIE DE SECOURS ET SYSTEME D'ALIMENTATION EN ENERGIE DE SECOURS, NOTAMMENT POUR SYSTEME DE PROTECTION DE PASSAGERS D'UN VEHICULE

(43) Veröffentlichungstag der Anmeldung: 11.09.2002
(73) Patentinhaber: SIEMENS AKTIENGESELLSCHAFT, 80333 München (DE)
(72) Erfinder: BAUMGARTNER, Walter, 93086 Woerth/Donau (DE); FÖLL, Albrecht, D-93057 Regensburg (DE); WEIGL, Gregor, D-92358 Schnufenhofen (DE)
(86) Internationale Anmeldenummer: PCT/DE1999/004001
(87) Internationale Veröffentlichungsnummer: WO 2001/044019

(56) Entgegenhaltungen:
- DE-A- 19 517 698
- US-A- 5 522 617

## Beschreibung

Die Erfindung betrifft ein Verfahren zum Steuern der Notenergieversorgung bei Ausfall der Batterie wenigstens zweier Energieverbraucher, insbesondere eines Energieverbrauchers und einer Zündvorrichtung eines Fahrzeuginsassen-Schutzsystems. Die Erfindung betrifft weiter ein Notenergieversorgungssystem für ein Fahrzeuginsassen-Schutzsystem.

Moderne Fahrzeuginsassen-Schutzsysteme arbeiten im allgemeinen derart, daß ein oder mehrere Steuergeräte mit Sensoren verbunden sind, die für die Fahrzeuginsassen gefährliche Zustände erkennen und Insassenschutzmittel, wie Airbags, Gurtstraffer usw. entsprechend vorbestimmten Algorithmen auslösen. Die Insassenschutzmittel werden häufig mittels Zündvorrichtungen ausgelöst, die eine elektrisch gezündete Zündpille aufweisen, deren Zündung zur explosionsartigen Entstehung von Treibgas führt, mit dem ein Airbag aufgeblasen wird, eine Gurtstraffereinrichtung gestrafft wird usw. Eine solche Schaltung ist beispielsweise aus US-A-5,522,617 bekannt.

Im Falle eines Unfalls kann die Fahrzeugbatterie von dem Insassenschutzsystem getrennt werden, so daß eine Notenergieversorgung zumindest für eine bestimmte Zeitdauer nach einem Aufprall gewährleistet sein muß. Diese Zeitdauer wird im allgemeinen als Autarkiezeitdauer bezeichnet. Bei einem Front- oder Seitenaufprall beträgt diese Autarkiezeitdauer beispielsweise 125 msec.

Neuere Fahrzeuginsassen-Schutzsysteme werden auch bei einem Überschlag aktiv und lösen entsprechende Schutzmittel, beispielsweise Airbags im Kopfbereich und zusätzliche Gurtstraffer, aus. Ein Überschlag vollzieht sich langsamer als ein Front- oder Seitenaufprall. Die Schutzmittel werden daher im allgemeinen bezüglich des Beginns einer zu einem Aufschlag führenden Fahrzeugverzögerung später aktiviert. Die Autarkiezeitdauer für einen Überschlagschutz beträgt daher beispielsweise 1 sec.

Als Energiereserven bzw. Energiespeicher für die Notenergieversorgung werden im allgemeinen Kondensatoren verwendet, die ggf. über Spannungsverstärker bzw. Step-Up-Spannungswandler auf eine gegenüber der Batterie höhere Spannung geladen werden. Solche Energiespeicher zur Aufrechterhaltung der Energieversorgung des Insassenschutzsystems über die jeweils zweckentsprechende Autarkiezeit sind sowohl platz- als auch kostenaufwendig.

Der Erfindung liegt die Aufgabe zugrunde, den für die Notenergieversorgung erforderlichen Aufwand zu vermindern.

Eine erste Lösung der Erfindungsaufgabe wird mit dem Verfahren gemäß dem Anspruch 1 gelöst.

Wenn der Energiespeicher während der Autarkiezeitdauer den ihm zugeordneten Energieverbraucher zur Ausführung einer Funktion mit Energie versorgt hat, ist der Energiespeicher im allgemeinen nicht vollständig entladen, sondern enthält infolge des Spannungsbedarfs des Energieverbrauchers, infolge Ohm'scher Leitungswiderstände usw. noch eine Restenergie, die zur Energieversorgung des anderen Energieverbrauchers genutzt werden kann. Wenn keine Entladung über den zugeordneten Energieverbraucher erfolgt, steht am Ende der Autarkiezeitdauer im allgemeinen ein Großteil der gespeicherten Energie zur Verfügung.

Die vorbestimmten Bedingungen, die zur Nutzung der Restenergie führen, können unterschiedlicher Art sein. Sie können darin bestehen, daß sehr früh entschieden wird, daß der zugeordnete Energieverbraucher nicht benötigt wird, daß er aktiviert wurde oder einfach darin, daß die Autarkiezeit abgelaufen ist.

Das erfindungsgemäße Verfahren kann für jedwelche Notenergieversorgungssysteme verwendet werden, bei denen ähnlich wie bei einem Fahrzeuginsassen-Schutzsystem Energieverbraucher mit unterschiedlichen Autarkiezeitdauern und/oder unterschiedlichen Spannungserfordernissen von der Notenergieversorgung dienenden Energiespeichern versorgt werden. Es versteht sich, daß der Energieverbraucher, der mit der Restenergie des einem anderen Energieverbraucher zugeordneten Energiespeichers versorgt wird, im allgemeinen eine längere Autarkiezeitdauer und geringere Spannungsanforderungen hat als der Energieverbraucher, der von dem Energiespeicher versorgt wird, dessen Restenergie genutzt wird. Es können über geeignete Spannungswandler jedoch auch Energieverbraucher mit höhereren Spannungsanforderungen mit Restenergie versorgt werden.

Der Anspruch 2 kennzeichnet den grundsätzlichen Aufbau eines Notenergieversorgungssystems für ein Fahrzeuginsassen-Schutzsystem zur Lösung der diesbezüglichen Erfindungsaufgabe.

Durch die Nutzung der verfügbaren Restenergie können die oder kann der Energiespeicher, der zusätzlich versorgt wird, kleiner ausgelegt werden. Des weiteren muß zur Notenergieversorgung weniger Energie gespeichert werden.

Die Unteransprüche bilden das erfindungsgemäße Notenergieversorgungssystem in vorteilhafter Weise weiter.

Die Erfindung wird im folgenden anhand schematischer Zeichnungen beispielsweise und mit weiteren Einzelheiten erläutert.

Es stellen dar:
- Fig. 1: ein Blockschaltbild eines Fahrzeuginsassen-Schutzsystems,
- Fig. 2: eine Schaltung einer Zündvorrichtung,
- Fig. 3: ein Blockschaltbild eines Notenergieversorgungssystems und
- Fig. 4: ein Blockschaltbild einer weiteren Ausführungsform eines Notenergieversorgungssystems.

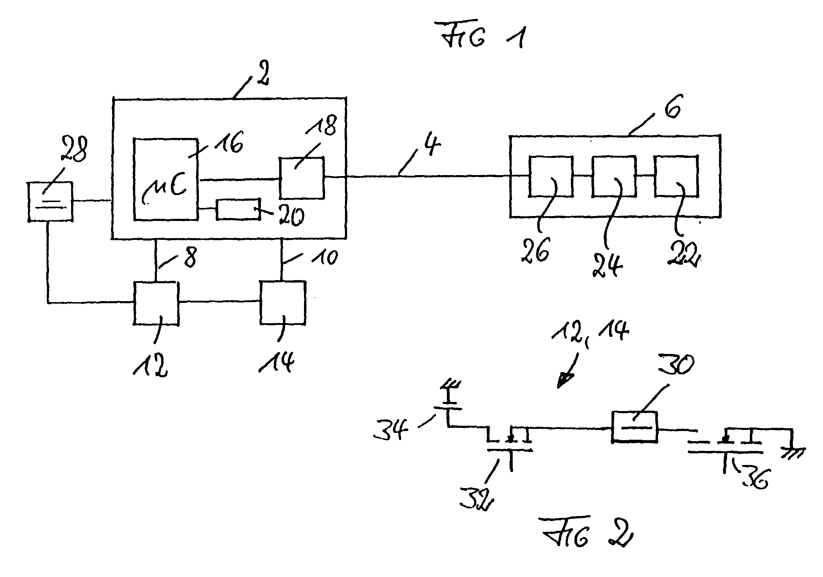

Gemäß Fig. 1 ist ein Steuergerät 2 über eine Leitung 4 mit einer Sensoreinheit 6 verbunden und über Leitungen 8 und 10 mit Zündgeräten 12 und 14 verbunden.

Das Steuergerät 2 enthält einen Mikroprozessor 16, der über eine Schnittstelle 18 mit der Leitung 4 verbunden ist, und einen linearen Beschleunigungssensor 20, der an einen Eingang des Mikroprozessors 16 angeschlossen ist.

Die Sensoreinheit 6 enthält einen Überschlagsensor 22, der über einen Mikroprozessor 24 und eine Schnittstelle 26 über die Leitung 4 mit dem Steuergerät 2 verbunden ist.

Zur Energieversorgung des Systems dient eine Batterie 28, beispielsweise die Fahrzeugbatterie, die mit dem Steuergerät 2 und den Zündgeräten 12 und 14 verbunden ist. Die Energieversorgung der Sensoreinheit 6 erfolgt über die Leitung 4, die vorteilhafterweise mehradrig ausgebildet ist.

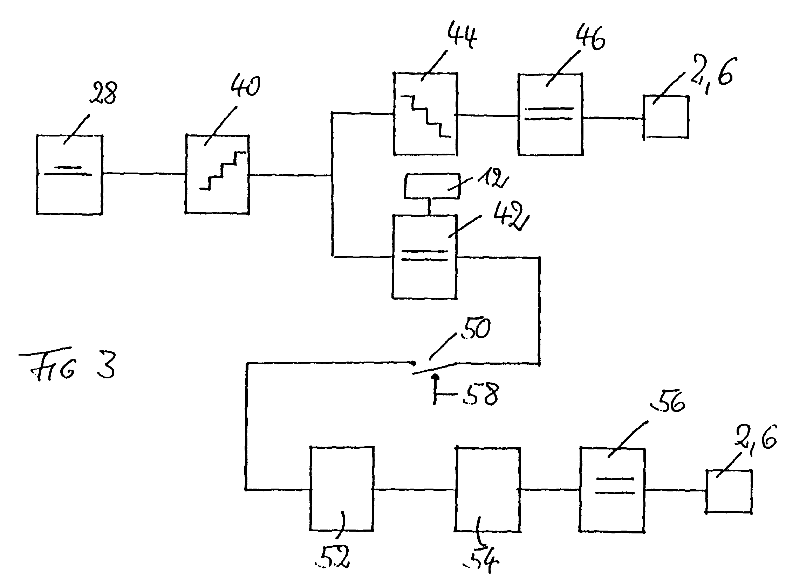

Fig. 2 zeigt einen Ausschnitt aus einer in einem der Zündgeräte 12 oder 14 enthaltenen Schaltung. Eine Zündpille 30 ist über einem ersten elektronisch ansteuerbaren Schalter 32 mit einer aus der Batterie 28 gespeisten Energiequelle 34 verbunden und über einen zweiten elektronisch ansteuerbaren Schalter 36 mit Masse verbunden. Der Schalter 36 ist beispielsweise ein Safing-Schalter, der schließt, wenn eine bestimmte Mindestverzögerung des Fahrzeugs vorhanden ist, die von einem Safing-Sensor erfaßt wird. Der Schalter 32 schließt, wenn ein im Mikroprozessor 16 ablaufender Algorithmus Signale von einem oder mehreren Sensoren 20 verarbeitet und ein Zündsignal über die Leitung 8 erzeugt. Wenn beide Schalter 32 und 36 geschlossen sind und die Spannungs- bzw. Energiequelle 34 ausreichend geladen ist, zündet die Zündpille 30.

Aufbau und Funktion des beschriebenen Insassenschutzsystems sind an sich bekannt und werden daher nicht im einzelnen erläutert. Der Aufbau kann in vielfältiger Weise abgeändert sein. Es können beispielsweise mehrere Zündgeräte vorgesehen sein. Das Steuergerät 2 und ggf. weiter vorhandene Sensoreinheiten 6 können in unterschiedlicher Weise zusammengefaßt sein und innerhalb des Fahrzeugs verteilt sein. Das Zünden der Zündpille 30 kann durch weniger oder mehr Schalter ausgelöst werden usw.

Die Spannungsanforderungen zur Energieversorgung des Steuergerätes 2 oder einer Sensoreinheit 6, die ggf. unmittelbar mit einem Zündgerät verbunden sein kann, liegen im allgemeinen unterhalb der Spannung, die zur Zündung eines der Zündgeräte 12 und 14 erforderlich ist.

Es sei angenommen, daß gemäß Fig. 1 das oder die Zündgeräte 12 bei einem Front- oder Seitenaufprall zünden sollen, wohingegen das oder die Zündgeräte 14 bei einem von der Sensoreinheit 6 erfaßten Rollover zünden sollen. Wie eingangs erläutert, ist die Autarkiezeitdauer, während der das oder die Zündgeräte 12 einschließlich des oder der zugehörigen Steuergeräte bei einem Ausfall der Batterie 28 funktionsfähig sein müssen, deutlich kürzer als die Autarkiezeitdauer des oder der Zündgeräte 14 mit den erforderlichen Steuereinheiten, im vorliegenden Fall dem Steuergerät 2 und der Sensoreinheit 6. Die Energieversorgung von der Batterie 28 her kann beispielsweise bei einer plötzlichen Fahrzeugverzögerung dadurch unterbrochen werden, daß die Batterie 28 aus ihrer Verankerung reißt und die Anschlußleitung durchtrennt wird.

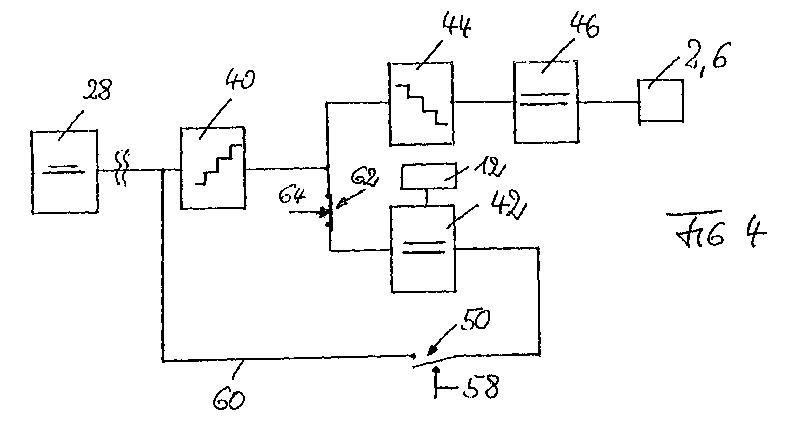

Fig. 3 zeigt den grundsätzlichen Aufbau eines Notenergieversorgungssystems für das Insassenschutzsystem der Fig. 1. Die Batterie 28 ist über einen Spannungsverstärker 40, der einen in seinem Aufbau an sich bekannten Step-Up-Regler enthält, mit einem als Kondensator ausgebildeten Energiespeicher 42 und mit einem parallel zum Energiespeicher 42 liegenden Spannungsminderer 44 verbunden, der einen in seinem Aufbau an sich bekannten Step-Down-Regler enthält. Der Ausgang des Spannungsminderers 44 ist mit einem weiteren, als Kondensator ausgebildeten Energiespeicher 46 verbunden, der zur Notenergieversorgung des Steuergerätes 2 (Fig. 1) und der Sensoreinheit 6 dient. Der Energiespeicherkondensator 42 dient zur Spannungsversorgung des oder der Zündgeräte 12. Die Step-Up- und Step-Down-Regler enthalten in an sich bekannter Weise beispielsweise eine Spule, einen FET und eine Diode.

Die Autarkiezeitdauer des Energiespeichers 42 ist derart, daß sie der für das oder die bei einem Front- oder Seitenaufprall zu zündenden Zündgeräte 12 entspricht, beispielsweise 125 msec.

Die Autarkiezeitdauer, die für das Steuergerät 2 und die Sensoreinheit 6 gewährleistet sein muß, liegt beispielsweise bei 1 sec. Es versteht sich, daß die genannten Autarkiezeitdauern nur beispielhaft sind. Damit der Energiespeicher 46 für diese lange Autarkiezeitdauer möglichst klein ausgebildet sein kann, ist dem Energiespeicher 42 ein steuerbarer Schalter 50 nachgeschaltet, der über einen weiteren Spannungsverstärker 52 und einem Spannungsminderer 54 mit einem als Kondensator ausgebildeten Energiespeicher 56 verbunden ist, der im dargestellten Beispiel ebenfalls zur Notenergieversorgung des Steuergerätes 2 und der Sensoreinheit 6 dient.

Die Funktion der beschriebenen Notenergieversorgung ist Folgende:

Es sei angenommen, die Batterie 28 wird bei einem Aufprall von dem System abgetrennt, der Schalter 50 ist offen und die Energiespeicher 42 und 46 sind aufgeladen. Es sei weiter angenommen, die Zündgeräte 12 würden über einen von dem Steuergerät 2 ausgelösten Zündimpuls gezündet, so daß sich der Energiespeicher 42, der dem in Fig. 2 dargestellten Kondensator 34 entspricht, über die geschlossenen Schalter 32 und 36 und die Zündpille 30 entlädt und die Zündpille 30 zündet. Die Widerstände der Schalter 32 und 36 sowie der Zündpille 30 bewirken, daß sich der Energiespeicher 42 von der erforderlichen Zündspannung von beispielsweise 25 Volt nicht auf Null entlädt, sondern auf einer Restspannung von 7 bis 8 Volt bleibt. Der Schalter 50 wird nach Zünden des oder der Zündgeräte 12 von einem vom Zündstrom getriggerten oder von dem Steuergerät 2 erzeugten, seinem Steuereingang 58 zugeführten Steuerimpuls geschlossen, so daß die Restenergie des Energiespeichers 42 dem Spannungsverstärker 52 zugeführt wird und nach Durchlaufen des Spannungsverminderers 54 im Energiespeicher 56 für die Zusatzenergieversorgung des Steuergerätes 2 und der Sensoreinheit 6 zur Verfügung steht. Durch diese zusätzlich verfügbare Energie kann der Energiespeicher 46 schwächer ausgelegt werden, da die erforderliche Autarkiezeitdauer und Nutzung der beiden Energiespeicher 46 und 56 erreicht werden muß.

Die Schaltung kann auch derart ausgeführt sein, daß das Steuergerät 2 den Schalter 50 nach Ablauf der Autarkiezeitdauer des oder der Zündgeräte 12 schließen kann, so daß die volle, im Energiespeicher 42 noch befindliche Energie für die Energieversorgung des Steuergerätes 2 und der Sensoreinheit 6 während der längeren Autarkiezeitdauer dieser Geräte verfügbar ist, falls das Zündgerät 12 nicht gezündet wird.

Für das oder die Zündgeräte 14, die nur bei einem Rollover ausgelöst werden sollen und deren Autarkiezeitdauer entsprechend länger als die des oder der Zündgeräte 12 ist, kann ein weiterer, vom Energiespeicher 42 unabhängiger Energiespeicher vorgesehen sein kann. Wenn bei einem Rollover auch immer das oder die Zündgeräte 12 gezündet werden sollen, ist dieser weitere Energiespeicher mit der langen Autarkiezeitdauer auch mit dem oder den Zündgeräten 12 verbunden.

Fig. 4 zeigt eine gegenüber Fig. 3 abgeänderte Ausführungsform eines Notenergieversorgungssystems. Die Abänderung besteht darin, daß die Baugruppen 52, 54 und 56 der Fig. 3 fehlen und der Schalter 50 über eine Leitung 60 mit dem Eingang des Spannungsverstärkers 40 verbunden ist. In der Zuleitung zu dem Speicherkondensator bzw. Energiespeicher 42 befindet sich ein weiterer Schalter 62, der einen Steuereingang 64 aufweist.

Die Funktion des Systems der Fig. 4 entspricht dem der Fig. 3 mit dem Unterschied, daß gleichzeitig mit dem Schließen des Schalters 50 der Schalter 62 geöffnet wird, so daß im Energiespeicher 42 enthaltene Restenergie dem Eingang des Spannungsverstärkers 40 zugeführt wird und von dort über den Spannungsminderer 44 für den Energiespeicher 46 zur Verfügung steht, so daß die für das Steuergerät 2 bzw. die Sensoreinheit 6 verfügbare Energie erhöht ist. In Fig. 4 ist durch die Doppellinie zwischen der Batterie 28 und dem Spannungsverstärker 40 angedeutet, daß die Batterie 28 im Falle eines Crashes vom Rest des Systems abgetrennt ist, das während vorbestimmter Autarkiezeiten eine Batterie-unabhängige Energieversorgung sicherstellt.

In den beschriebenen Ausführungsformen wurden die Energiespeicher 42, 46 und 56 jeweils mit geregelten Spannungen versorgt. Es versteht sich, daß dies nicht zwingend erforderlich ist.

Die beschriebenen Schaltungen können in vielfältiger Weise abgeändert werden. Wesentlich ist, daß im Energiespeicher eines Verbrauchers verbleibende Restenergie zusätzlich zur Energieversorgung eines anderen Energieverbrauchers genutzt wird.

## Patentansprüche

1. Verfahren zum Steuern der Notenergieversorgung bei Ausfall der Batterie wenigstens zweier Energieverbraucher (2, 6, 12), insbesondere eines Energieverbrauchers (2, 6) und einer Zündvorrichtung (12) eines Fahrzeuginsassen-Schutzsystems, wobei wenigstens dem einen Energieverbraucher (12) ein Energiespeicher (42) zugeordnet ist, der nach Ausfall einer Energiequelle (28) für eine vorbestimmte Autarkiezeitdauer dessen Energieversorgung gewährleistet,
bei welchem Verfahren die in dem dem einen Energieverbraucher (12) zugeordneten Energiespeicher (42) nach Eintreten vorbestimmter Bedingungen vorhandene Restenergie zur Energieversorgung des anderen Energieverbrauchers (2, 6) verwendet wird.

2. Notenergieversorgungssystem bei Ausfall der Batterie für ein Fahrzeuginsassen-Schutzsystem mit wenigstens einer Steuereinheit (2, 6) und einer Zündvorrichtung (12), enthaltend
einen Energiespeicher (56) zur Versorgung der Steuereinheit (2, 6) und
einen weiteren Energiespeicher (42) zur Versorgung der Zündvorrichtung (12),
welche Energiespeicher (42, 56) von einer Energiequelle (28) aufgeladen werden und bei Ausfall der Energiequelle die Energieversorgung der Steuereinheit (2, 6) und der Zündvorrichtung (12) während vorbestimmter Autarkiezeitdauern aufrechterhalten, wobei die Autarkiezeitdauer der Steuereinheit (2, 6) größer ist als die der Zündvorrichtung (12), und
wobei der der Zündvorrichtung (12) zugeordnete Energiespeicher (42) über einen steuerbaren Schalter (50) mit einem weiteren Energiespeicher (56) verbindbar ist, so daß in dem Energiespeicher (42) der Zündvorrichtung (12) verfügbare Restenergie zur Energieversorgung der Steuereinheit (2, 6) verfügbar ist.

3. Notenergieversorgungssystem nach Anspruch 2, wobei der Schalter (50) nach Ablauf der Autarkiezeitdauer der Zündvorrichtung (12) geschlossen wird.

4. Notenergieversorgungssystem nach Anspruch 2, wobei der Schalter (50) nach Zündung der Zündvorrichtung (12) geschlossen wird.

5. Notenergieversorgungssystem nach einem der Ansprüche 2 bis 4, wobei der Schalter (50) von der Steuereinheit (2) gesteuert wird, die auch die Zündvorrichtung (12) steuert.

6. Notenergieversorgungssystem nach Anspruch 2 oder 3, wobei die Zündvorrichtung (12) bei einem Frontalaufprall auszulösende Sicherheitsmittel auslöst und das Steuergerät (2, 6) die Auslösung von bei einem Überschlag auszulösenden Sicherheitsmitteln steuert.

7. Notenergieversorgungssystem nach einem der Ansprüche 2 bis 6, wobei die Zündvorrichtung eine Zündpille (30) enthält, die in Reihe mit zwei elektronischen Schaltern (32, 36) geschaltet ist, die zur Zündung der Zündpille auf Durchlaß geschaltet sind.

8. Notenergieversorgungssystem nach einem der Ansprüche 2 bis 7, wobei einer Fahrzeugbatterie (28) ein Spannungsverstärker (40) nachgeschaltet ist, dessen Ausgang mit dem der Zündvorrichtung (12) zugeordneten Energiespeicher (42) und dem Eingang eines Spannungsminderers (44) verbunden ist, dessen Ausgang mit dem Energiespeicher (46) der Steuereinheit (2, 6) verbunden ist, und wobei der der Zündvorrichtung zugeordnete Energiespeicher (42) über den Schalter (50) mit einem weiteren Energiespeicher (56) verbunden ist.

9. Notenergieversorgungssystem nach Anspruch 8, wobei der weitere Energiespeicher (56) über einen Spannungsminderer (54) und einen Spannungsverstärker (52) mit dem Schalter (50) verbunden ist.

10. Notenergieversorgungssystem nach einem der Ansprüche 2 bis 7, wobei einer Fahrzeugbatterie (28) ein Spannungsverstärker (40) nachgeschaltet ist, dessen Ausgang mit dem der Zündvorrichtung (12) zugeordneten Energiespeicher (42) und dem Eingang eines Spannungsminderers (44) verbunden ist, dessen Ausgang mit dem Energiespeicher (46) der Steuereinheit (2, 6) verbunden ist, und wobei der der Zündvorrichtung zugeordnete Energiespeicher (42) über den Schalter (50) mit dem Eingang des Spannungsverstärkers (40) verbunden ist.

## Claims

1. Method for controlling the emergency power supply in the event of battery failure of at least two power loads (2, 6, 12), in particular a power load (2, 6) and a firing device (12) of a vehicle occupant protection system, an energy store (42), which, after failure of a power source (28) for a predetermined autarchy time period, ensures the power supply of the power load, being assigned at least to the one power load (12), in which method the residual energy present in the energy store (42) assigned to the one power load (12) after the occurrence of predetermined conditions is used to supply power to the other power load (2, 6).

2. Emergency power supply system for battery failure for a vehicle occupant protection system having at least one control unit (2, 6) and a firing device (12), containing an energy store (56) for supplying the control unit (2, 6) and a further energy store (42) for supplying the firing device (12), which energy stores (42, 56) are charged by an energy source (28) and, when the energy source fails, maintain the power supply of the control unit (2, 6) and of the firing device (12) during predetermined autarchy time periods, the autarchy time period of the control unit (2, 6) being longer than that of the firing device (12), and the energy store (42) which is assigned to the firing device (12) being able to be connected to a further energy store (56) via a controllable switch (50) so that residual energy which is available in the energy store (42) of the firing device (12) is available for supplying power to the control unit (2, 6).

3. Emergency power supply system according to Claim 2, the switch (50) being closed after expiry of the autarchy time period of the firing device (12).

4. Emergency power supply system according to Claim 2, the switch (50) being closed after firing of the firing device (12).

5. Emergency power supply system according to Claims 2 to 4, the switch (50) being controlled by the control unit (2) which also controls the firing device (12).

6. Emergency power supply system according to Claim 2 or 3, the firing device (12) triggering safety means which are to be triggered in the event of a head-on impact, and the control unit (2, 6) controlling the triggering of safety means which are to be triggered in the event of a rollover.

7. Emergency power supply system according to one of Claims 2 to 6, the firing device containing a firing cap (30) which is connected in series to two electronic switches (32, 36) which are switched to conduction in order to fire the firing cap.

8. Emergency power supply system according to one of Claims 2 to 7, a voltage booster (40) whose output is connected to the energy store (42) assigned to the firing device (12), and to the input of a voltage reducer (44) whose output is connected to the energy store (46) of the control unit (2, 6) being connected downstream of a vehicle battery (28), and the energy store (42) which is assigned to the firing device being connected to a further energy store (56) via the switch (50).

9. Emergency power supply system according to Claim 8, the further energy store (56) being connected to the switch (50) via a voltage reducer (54) and a voltage booster (52).

10. Emergency power supply system according to one of Claims 2 to 7, a voltage booster (40) whose output is connected to the output of the energy store (42) assigned to the firing device (12) and to the input of a voltage reducer (44) whose output is connected to the energy store (46) of the control unit (2, 6) being connected downstream of a vehicle battery (28), and the energy store (42) which is assigned to the firing device being connected to the input of the voltage booster (40) via the switch (50).

## Revendications

1. Procédé pour commander l'alimentation en énergie de secours, en cas de panne de la batterie, d'au moins deux consommateurs d'énergie (2, 6, 12), en particulier d'un consommateur d'énergie (2, 6) et d'un dispositif d'allumage (12) d'un système de protection des passagers d'un véhicule, selon lequel au moins à un consommateur d'énergie (12) est associé un accumulateur d'énergie (42) qui, après la défaillance d'une source d'énergie (28), garantit son alimentation en énergie pendant une durée d'autarcie prédéterminée,
procédé selon lequel l'énergie résiduelle présente dans l'accumulateur d'énergie (42) associé à un consommateur d'énergie (12) après la réalisation de conditions prédéterminées est utilisée pour l'alimentation en énergie de l'autre consommateur d'énergie (2, 6).

2. Système d'alimentation en énergie de secours, en cas de panne de la batterie, pour un système de protection des passagers d'un véhicule avec au moins une unité de commande (2, 6) et un dispositif d'allumage (12), contenant
un accumulateur d'énergie (56) pour l'alimentation de l'unité de commande (2, 6) et
un autre accumulateur d'énergie (42) pour l'alimentation du dispositif d'allumage (12),
dans lequel les accumulateurs d'énergie (42, 56) sont chargés par une source d'énergie (28) et maintiennent, en cas de panne de la source d'énergie, l'alimentation en énergie de l'unité de commande (2, 6) et du dispositif d'allumage (12) pendant des durées d'autarcie prédéterminées, la durée d'autarcie de l'unité de commande (2, 6) étant plus grande que celle du dispositif d'allumage (12), et
dans lequel l'accumulateur d'énergie (42) associé au dispositif d'allumage (12) peut être relié par un commutateur contrôlable (50) avec un autre accumulateur d'énergie (56), de sorte que l'énergie résiduelle disponible dans l'accumulateur d'énergie (42) du dispositif d'allumage (12) est disponible pour l'alimentation en énergie de l'unité de commande (2, 6).

3. Système d'alimentation en énergie de secours selon la revendication 2, dans lequel le commutateur (50) est fermé après l'écoulement de la durée d'autarcie du dispositif d'allumage (12).

4. Système d'alimentation en énergie de secours selon la revendication 2, dans lequel le commutateur (50) est fermé après l'allumage du dispositif d'allumage (12).

5. Système d'alimentation en énergie de secours selon l'une des revendications 2 à 4, dans lequel le commutateur (50) est commandé par l'unité de commande (2) qui commande aussi le dispositif d'allumage (12).

6. Système d'alimentation en énergie de secours selon la revendication 2 ou 3, dans lequel le dispositif d'allumage (12) déclenche des moyens de sécurité à déclencher en cas de collision frontale et le dispositif de commande (2, 6) commande le déclenchement de moyens de sécurité à déclencher en cas de tonneau.

7. Système d'alimentation en énergie de secours selon l'une des revendications 2 à 6, dans lequel le dispositif d'allumage contient un déclencheur (30) qui est monté en série avec deux commutateurs électroniques (32, 36) qui sont connectés à l'état passant pour l'allumage du déclencheur.

8. Système d'alimentation en énergie de secours selon l'une des revendications 2 à 7, dans lequel en aval d'une batterie de véhicule (28) est monté un amplificateur de tension (40) dont la sortie est reliée avec l'accumulateur d'énergie (42) associé au dispositif d'allumage (12) et avec l'entrée d'un réducteur de tension (44) dont la sortie est reliée avec l'accumulateur d'énergie (46) de l'unité de commande (2, 6), et dans lequel l'accumulateur d'énergie (42) associé au dispositif d'allumage est relié par le commutateur (50) avec un autre accumulateur d'énergie (56).

9. Système d'alimentation en énergie de secours selon la revendication 8, dans lequel l'autre accumulateur d'énergie (56) est relié par un réducteur de tension (54) et un amplificateur de tension (52) avec le commutateur (50).

10. Système d'alimentation en énergie de secours selon l'une des revendications 2 à 7, dans lequel en aval d'une batterie de véhicule (28) est monté un amplificateur de tension (40) dont la sortie est reliée avec l'accumulateur d'énergie (42) associé au dispositif d'allumage (12) et l'entrée d'un réducteur de tension (44) dont la sortie est reliée avec l'accumulateur d'énergie (46) de l'unité de commande (2, 6), et dans lequel l'accumulateur d'énergie (42) associé au dispositif d'allumage est relié par le commutateur (50) avec l'entrée de l'amplificateur de tension (40).
